# EUROPEAN PATENT SPECIFICATION

(11) **EP 4 182 632 B1**
(45) Date of publication and mention of the grant of the patent: **18.11.2026**
(21) Application number: 21841244.3
(22) Date of filing: 07.07.2021
(51) Int. Cl.: G01C 21/20, G01C 21/00, G01C 21/16

(54) **INDOOR POSITIONING WITH PLURALITY OF MOTION ESTIMATORS**
INNENRAUMPOSITIONIERUNG MIT MEHREREN BEWEGUNGSSCHÄTZERN
POSITIONNEMENT EN INTÉRIEUR À L'AIDE D'UNE PLURALITÉ D'ESTIMATEURS DE MOUVEMENT".

(30) Priority: 16.07.2020 US 202063052471 P
(43) Date of publication of application: 24.05.2023
(73) Proprietor: Oriient New Media Ltd., 6954407 Tel-Aviv (IL)
(72) Inventor: FRISH, Amiram, Giv'atayim (IL); ENOSH, Imri, 7634939 Rehovot (IL); PINES, Omry, Tel Aviv (IL)
(74) Representative: Kancelaria Eupatent.pl Sp. z o.o.
(86) International application number: PCT/IB2021/056085
(87) International publication number: WO 2022/013683

(56) References cited:
- WO-A1-2019/172874
- WO-A1-2020/074921
- US-A1- 2010 188 504
- US-A1- 2011 178 708
- US-A1- 2017 138 740
- US-A1- 2018 211 137
- US-A1- 2019 154 449

## Description

### CROSS-REFERENCE TO RELATED APPLICATIONS

This application claims priority from US Provisional Patent Application No. 63/052,471, filed July 16, 2020.

### TECHNICAL FIELD

The present invention relates to indoor positioning systems, and in particular motion estimation for indoor positioning systems.

### BACKGROUND OF THE INVENTION

Mobile devices provide users with a variety of services. One such service is navigation. Navigation in outdoor environments can take advantage of a variety of inputs and sensors, for example global positioning system (GPS) related inputs and sensors. Navigation in GPS-denied or GPS-inaccurate areas requires new methods and systems to navigate, track, and position mobile devices, for example indoors, underground, dense urban streets with high buildings, natural canyons, and similar environments.

A typical modem Indoor Positioning System (IPS) relies on a mapping process which associates sensors measurements in a location (location fingerprint) to coordinates of an indoor map. An IPS may use various mobile device sensors measurements, such as received signal strength indication (RSSI) from transceiver beacons (e.g., wireless LAN modules) or magnetic measurements, to perform the mapping process. These types of sensor measurements are environmental measurements that sense the environment in the locations in which a mobile device has traversed, and the map that is created may be referred to as the fingerprint map and is used for positioning by matching new device sensor measurements to the fingerprint map. Some IPSs also update the fingerprint map while positioning in a process known as Simultaneous localization and Mapping (SLAM). In some IPSs, the map is not a fingerprint map but rather some feature map that is either derived directly from the sensor measurements or by performing some additional operations on the fingerprint map. A slightly different set of positioning systems do not use environmental sensing to sense the environment in the locations in which a mobile device has traversed, but instead use visual features (extracted from images captured by the mobile device camera) that are associated with locations that the mobile device camera sees rather than the locations the mobile device has traversed. Such positioning systems are referred to as Visual Positioning System (VPS). In VPS, the feature map is built up from visual features extracted from a camera input.

An international patent application WO2019172874A1 discloses a method, apparatus, and computer program product for maintaining the ability of an electronic headset to localize and orient itself in space upon a loss of tracking by a SLAM (simultaneous localization and mapping) system by switching to an auxiliary tracking mode upon detection of a loss of accurate tracking by the SLAM system.

An international patent application WO2020074921A1 discloses a computer-implemented method performed in a tracking system for tracking the motion of a body, as a function of time.

A US patent application US2018211137A1 discloses an electronic device comprising one or more imaging cameras, wherein after a reset of the device or other specified event, the electronic device identifies an estimate of the device's pose based on location data such as Global Positioning System (GPS) data, cellular tower triangulation data, wireless network address location data, and the like. The one or more imaging cameras may be used to capture imagery of the local environment of the electronic device, and this imagery is used to refine the estimated pose to identify a refined pose of the electronic device.

A crucial component in many position systems is motion estimation. Motion estimation is the process of understanding the motion dynamic of a mobile device from available sensors of a mobile device. Assuming some initial device reference frame, motion estimation provides estimates of the location, velocity and sometimes also orientation (pose in the reference frame) of the mobile device. While this estimation may provide a mobile device trajectory or path estimate in some reference frame, the estimation does not provide the location and orientation of the mobile device in the map global coordinate system, i.e., the map reference frame. Further, even if the mobile device initial location and orientation are known in the map reference frame, the accumulation of estimation errors over time will eventually result in large errors in estimated position of the mobile device in the map frame. Thus, motion estimation by itself is not enough to be considered as a positioning system. However, motion estimation can provide useful information when used as part of the position system.

In practice motion estimation is not trivial to achieve. Traditionally, inertial sensors such as accelerometers and gyroscopes are used to understand device motion. However, straightforward gravity cancelation and linear accelerations integration yields large location errors in a very short amount of time, rendering approaches based solely on inertial sensors unsuitable. Other motion estimation approaches include Pedestrian Dead Reckoning for motion estimation as well trajectory estimation using Deep Learning (DL) approaches. However, these approaches still suffer from various types of errors, and the performance of a motion estimation technique may change significantly depending on the type of motion and quality of sensors and sensor measurement used to form the estimates.

### SUMMARY OF THE INVENTION

The present invention is directed to motion estimation methods and systems, according to the appended claims.

Embodiments of the present disclosure are directed to a method according to claim 1.

Optionally, the one or more estimate components include at least one of: a location estimate, an orientation estimate, or a velocity estimate.

Optionally, the transformation includes one or more transformation operations.

Optionally, the one or more transformation operations include at least one of: a rotation transformation operation, a translation transformation operation, or a scale transformation operation.

Optionally, the one or more transformation operations includes a time shift operation that shifts time instances associated with an estimate component of the estimate of position formed from the second motion estimator relative to time instances associated with a corresponding estimate component of the estimate of position formed by the first motion estimator.

Optionally, the first motion estimator applies a first motion estimation technique, and the second motion estimator applies a second motion estimation technique different from the first motion estimation technique.

Optionally, the estimate of position formed by the first motion estimator is based on sensor data that is different from sensor data used by the second motion estimator.

Optionally, the method further comprises: receiving, by an indoor positioning system associated with the mobile device, a position estimate formed at least in part from each of the estimate of position formed from the first motion estimator and the estimate of position formed from the second motion estimator; and modifying, by the indoor positioning system, map data associated with an indoor environment in which the mobile device is located based at least in part on the received position estimate.

Optionally, the method further comprises: switching from the first motion estimator to the second motion estimator in response to at least one switching condition.

Optionally, the switching includes: applying the transformation to transform at least one estimate component of the one or more estimate components of the estimate of position formed by the second motion estimator from the reference frame associated with the second motion estimator to the reference frame associated with the first motion estimator.

Optionally, the at least two motion estimators include at least a third motion estimator, and the method further comprises: determining a second transformation from the reference frame associated with the third motion estimator to the reference frame associated with the first motion estimator based at least in part on at least one estimate component of the one or more estimate components of the estimates of position formed by each of the first and third motion estimators; and switching from the second motion estimator to the third motion estimator in response to at least one switching condition by applying the second transformation to transform at least one estimate component of the one or more estimate components of the estimate of position formed by the third motion estimator from the reference frame associated with the third motion estimator to the reference frame associated with the first motion estimator.

Optionally, the at least one switching condition is based on at least one of: i) availability of the first motion estimator, ii) availability of the second motion estimator, iii) an estimation uncertainty associated with the first motion estimator, or iv) an estimation uncertainty associated with the second motion estimator.

Optionally, the method further comprises: combining an estimate component of the one or more estimate components of the estimate of position formed by the first motion estimator with a corresponding estimate component of the one or more estimate components of the estimate of position formed by the second motion estimator, the combining based on: i) the transformation, and ii) a first set of weights associated with the estimate component formed by the first motion estimator and a second set of weights associated with the estimate component formed by the second motion estimator.

Optionally, the weights in the first set of weights are a function of an estimation uncertainty associated with the estimate component formed by the first motion estimator, and the weights in the second set of weights are a function of an estimation uncertainty associated with the estimate component formed by the second motion estimator.

Optionally, the weights in the first set of weights are inversely proportional to the covariance, the variance, or the standard deviation of the estimate component formed by the first motion estimator, and the weights in the second set of weights are inversely proportional to the covariance, the variance, or the standard deviation of the estimate component formed by the second motion estimator.

Optionally, the weights in the first set of weights and the weights in the second set of weights have fixed ratios between each other.

Embodiments of the present disclosure are directed to a system according to claim 15.

Optionally, the system further comprises: an indoor positioning system associated with the mobile device configured to: receive a position estimate formed at least in part from each of the estimate of position formed from the first motion estimator and the estimate of position formed from the second motion estimator, and modify map data associated with an indoor environment in which the mobile device is located based at least in part on the received position estimate.

Optionally, the processing unit is further configured to: switch from the first motion estimator to the second motion estimator in response to at least one switching condition.

Optionally, the processing unit is further configured to: apply the transformation so as to transform at least one estimate component of the one or more estimate components of the estimate of position formed by the second motion estimator from the reference frame associated with the second motion estimator to the reference frame associated with the first motion estimator.

Optionally, the at least one switching condition is based on at least one of: i) availability of the first motion estimator, ii) availability of the second motion estimator, iii) an estimation uncertainty associated with the first motion estimator, or iv) an estimation uncertainty associated with the second motion estimator.

Optionally, the processing unit is further configured to: combine an estimate component of the one or more estimate components of the estimate of position formed by the first motion estimator with a corresponding estimate component of the one or more estimate components of the estimate of position formed by the second motion estimator, the combining based on: i) the transformation, and ii) a first set of weights associated with the estimate component formed by the first motion estimator and a second set of weights associated with the estimate component formed by the second motion estimator.

Optionally, the weights in the first set of weights are a function of an estimation uncertainty associated with the estimate component formed by the first motion estimator, and the weights in the second set of weights are a function of an estimation uncertainty associated with the estimate component formed by the second motion estimator.

Optionally, the weights in the first set of weights are inversely proportional to the covariance, the variance, or the standard deviation of the estimate component formed by the first motion estimator, and the weights in the second set of weights are inversely proportional to the covariance, the variance, or the standard deviation of the estimate component formed by the second motion estimator.

Optionally, the weights in the first set of weights and the weights in the second set of weights have fixed ratios between each other.

Optionally, the processing unit is carried by the mobile device.

Optionally, one or more components of the processing unit is remotely located from the mobile device and is in network communication with the mobile device.

Unless otherwise defined herein, all technical and/or scientific terms used herein have the same meaning as commonly understood by one of ordinary skill in the art to which the invention pertains. Although methods and materials similar or equivalent to those described herein may be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the present invention are herein described, by way of example only, with reference to the accompanying drawings. With specific reference to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

Attention is now directed to the drawings, where like reference numerals or characters indicate corresponding or like components. In the drawings:
FIG. 1 is a diagram of the architecture of an exemplary system embodying the present disclosure, including a mobile device having sensors, motion estimators that estimate position of the mobile device over time based on sensor data generated by the sensors, a transformation module that transforms estimates from one motion estimator reference frame to another motion estimator reference frame, and an IPS module;
FIG. 2A is a schematic representation of a first trajectory estimate in the reference frame of a first motion estimator, and a second trajectory estimate in the reference frame of a second motion;
FIG. 2B is a schematic representation of the second trajectory estimate of FIG. 2A spatially aligned to the reference frame of the first motion estimator;
FIG. 3 is a flow diagram illustrating a process, executed by the system according embodiment of the present disclosure, that includes steps for transforming estimates formed by a first motion estimator from the reference frame of the first motion estimator to the reference frame of a second motion estimator;
FIG. 4 is a flow diagram illustrating a process, executed by the system according embodiment of the present disclosure, that includes steps for performing an alignment between motion estimator reference frames, and switching from a first motion estimator to a second motion estimator;
FIG. 5 is a flow diagram illustrating a process, executed by the system according embodiment of the present disclosure, that includes steps for performing an alignment between motion estimator reference frames, and combining estimates from the two motion estimators; and
FIG. 6 is a diagram of the architecture of an exemplary system embodying the present disclosure that is generally similar to the system of FIG. 1, but in which one of the motion estimators is a visual odometry motion estimator, and in which the IPS is an environmental IPS.

### DESCRIPTION OF THE PREFERRED EMBODIMENTS

The present invention is directed to motion estimation methods and system.

Before explaining at least one embodiment of the invention in detail, it is to be understood that the invention is not necessarily limited in its application to the details of construction and the arrangement of the components and/or methods set forth in the following description and/or illustrated in the drawings and/or the examples. The invention is capable of other embodiments or of being practiced or carried out in various ways.

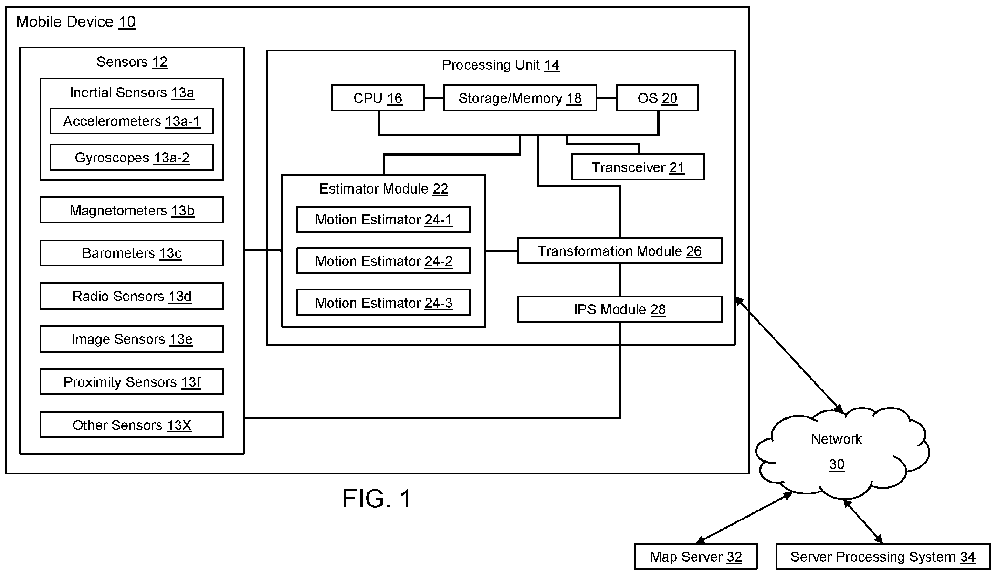

Referring now to the drawings, FIG. 1 illustrates a mobile device **10** according to non-limiting embodiments of certain aspects of the present disclosure. Generally speaking, the mobile device **10** can be any type of communication device that includes one or more sensors, and moves or can be moved from one location to another, often while exchanging data via a communication network, such as a cellular network or a wireless local area network. Examples of such communication devices include, but are not limited to, smartphones, tablet computers, laptop computers, and the like. Most typically, the mobile device **10** is implemented as a smartphone (such as an iPhone from Apple of Cupertino, CA) or a tablet computer (such as an iPad also from Apple of Cupertino, CA).

The mobile device **10** includes one or more sensors **12** and a processing unit **14**. The sensors **12** preferably includes a plurality of sensors, including, but not limited to, one or more inertial sensors **13**a such as one or more accelerometers **13**a-1 and/or one or more gyroscopes **13**a-2, one or more magnetometers **13**b, one or more barometers **13**c, one or more radio sensors **13**d, one or more image sensors **13**e (that are part of a camera (i.e., imaging device), which can be a depth camera, of the mobile device **10**), one or more proximity sensors **13**f, or any other type of sensor (designated as other sensors **13**X) that can provide sensor data that can be used by the embodiments of the present disclosure.

One or more of the sensors **12** generate sensor data in response to various sensor measurements collected and performed at the mobile device **10.** The sensor data is provided to the processing unit **14,** which collects the sensor data. In certain non-limiting implementations, the sensors **12** provide the sensor data to the processing unit **14** via a communication or data link, such as a data bus. The processing unit **14** processes the collected sensor data to, among other things, perform motion estimation for the mobile device **12** and determine and/or estimate position of the mobile device **12.**

The processing unit **14** includes a central processing unit (CPU) **16,** a storage/memory **18,** an operating system (OS) **20,** a transceiver unit **21,** an estimator module **22,** a transformation module **26,** and an indoor positioning system (IPS) module **28.** Although the CPU **16** and the storage/memory **18** are each shown as single components for representative purposes, either or both of the CPU and the storage/memory may be multiple components.

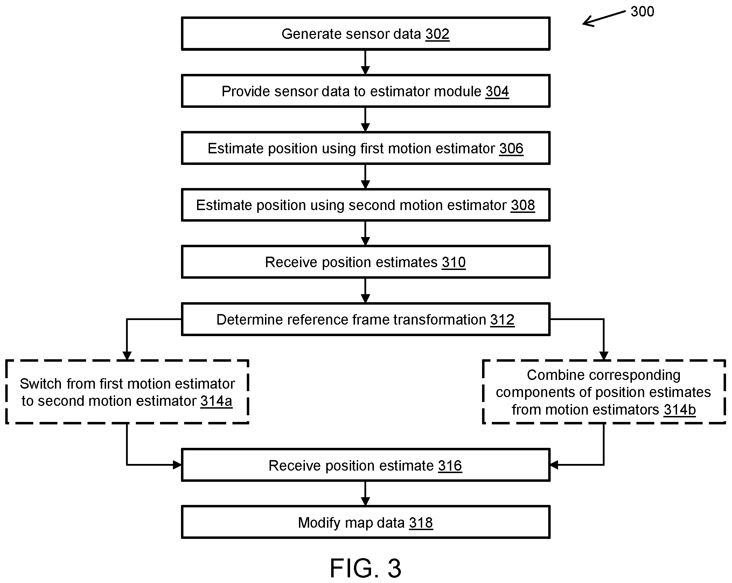

The CPU **16** is formed of one or more computerized processors, including microprocessors, for performing the functions of the mobile device **10,** including executing the functionalities and operations of the estimator module **22** which includes performing motion estimation via motion estimators **24-1, 24-2, 24-3,** executing the functionalities and operations of the transformation module **26** which includes calculating transformations between reference frames of the motion estimators **24-1, 24-2, 24-3,** switching between motion estimators **24-1, 24-2, 24-3,** and combining the estimates formed by some or all of the motion estimators **24-1, 24-2, 24-3,** as will be detailed herein, including the processes shown and described in the flow diagrams of FIGS. 3 - 5, as well as executing the functionalities and operations of the OS **20.** The processors are, for example, conventional processors, such as those used in servers, computers, and other computerized devices. For example, the processors may include x86 Processors from AMD and Intel, Xeon^{®} and Pentium^{®} processors from Intel, as well as any combinations thereof.

The storage/memory **18** is any conventional computer storage media. The storage/memory **18** stores machine executable instructions for execution by the CPU **16,** to perform the processes of the present embodiments. The storage/memory **18** also includes machine executable instructions associated with the operation of the components of the mobile device **10,** including the sensors **12,** and all instructions for executing the processes of FIGS. 3 - 5, as will be detailed herein.

The OS **20** includes any of the conventional computer operating systems, such as those available from Microsoft of Redmond Washington, commercially available as Windows^{®} OS, such as Windows^{®} 10, Windows^{®} 7, Apple of Cupertino, CA, commercially available as MAC OS, or iOS, open-source software based operating systems, such as Android, and the like.

Each of the estimator module **22** and the transformation module **26** can be implemented as a hardware module or a software module, and includes software, software routines, code, code segments and the like, embodied, for example, in computer components, modules and the like, that are installed on the mobile device **10.** Each of the estimator module **22** and the transformation module **26** performs actions when instructed by the CPU **16.**

The transceiver unit **21** can be any transceiver that includes a modem for transmitting data to, and receiving data from, a network **30,** which can be formed from one or more networks including, for example, cellular networks, the Internet, wide area, public, and local networks. The transceiver unit **21** can typically be implemented as a cellular network transceiver for communicating with a cellular network, such as, for example, a 3G, 4G, 4G LTE, or 5G cellular network. Such cellular networks are communicatively linked to other types of networks, including the Internet, via one or more network connections or communication hubs, thereby allowing the mobile device **10** to communicate with a variety of types networks, including those networks mentioned above.

All components of the mobile device **10** are connected or linked to each other (electronically and/or data), either directly or indirectly.

One or more servers, exemplarily illustrated in FIG. 1 as a map server **32** and a server processing system **34** (i.e., remote processing system), can be communicatively coupled to the network **30,** thereby allowing the mobile device **10** to exchange data and information (via for example the transceiver **21**) with the map server **32** and/or the server processing system **34** over the network **30.** The data and information exchanged with the map server **32** can include map data that is descriptive of an indoor environment, including a fingerprint map or a feature map. The data and information exchanged with the server processing system **34** can include, for example, sensor data generated by the sensors **12,** position estimates generated by the motion estimators **24-1, 24-2,** and **24-3,** and the like. The map server **32** and the server processing system **34** can be implemented in a single server or multiple servers. Each such server typically includes one or more computerized processors, one or more storage/memory (computer storage media), and an operating system.

The sensors **12,** the estimator module **22,** and the transformation module **26** together form a system, which can be part of, cooperate with, or include an IPS. In certain embodiments, the system further includes an IPS, exemplarily represented by the IPS module **28.** In certain embodiments, such as the non-limiting exemplarily illustration of the mobile device **10** in FIG. 1, the estimator module **22** and the transformation module **26** are elements of the processing unit **14,** such that the sensors **12** and these elements of the processing unit **14** together form a system. In such embodiments, all of the components or a majority of the components of the system are local to the mobile device **10.** In other embodiments, the estimator module **22,** and/or the transformation module **26,** and/or the IPS module **28** is/are implemented in separate processing systems. In one set of example embodiments, the estimator module **22,** and/or the transformation module **26,** and/or the IPS module **28** are implemented as components or elements of the server processing system **34,** such that the system includes the sensors **12** and certain components or elements of the server processor **34.** In one set of non-limiting implementations according to such embodiments, only the sensors **12** are local to the mobile device **10,** and all remaining components of the system, including the estimator module **22,** the transformation module **26,** and the IPS module **28,** are remotely located from the mobile device **10,** and are implemented as components or elements of the server processing system **34** or one or more such server processing systems.

The estimator module **22** includes a plurality of motion estimators **24-1, 24-2,** and **24-3.** Although three motion estimators are illustrated in FIG. 1, the embodiments of the present disclosure can be implemented using at least two motion estimators, and in certain cases more than 5 motion estimators, and in other cases 10 or more motion estimators. In certain situations, it may be convenient to use several tens or even hundreds of motion estimators.

It is noted that although the estimator module **22** is shown as a single module for representative purposes, the estimator module **22** may be multiple modules. For example, each of the motion estimators can be part of its own respective estimator module, or one group of the motion estimators may be part of one estimator module and another group of the motion estimators may be part of another estimator module and so on. However, for clarity of illustration it is convenience to represent all of the motion estimators as being part of a single estimator module **22.**

Each of the motion estimators **24-1, 24-2,** and **24-3** is configured to perform a motion estimation technique to estimate a position of the mobile device **10** over time in some reference frame based on collected sensor data (i.e., the sensor data generated by the sensors **12**). Each of the motion estimators **24-1, 24-2,** and **24-3** has an associated reference frame (reference coordinate system) which may be the same or different from the reference frame of the other motion estimators. As a result, the estimated position formed (i.e., produced, generated) by a given motion estimator is in the reference frame of that motion estimator. The reference frame of a given one of the motion estimators **24-1, 24-2,** and **24-3** can be the reference frame of the mobile device **10,** or can be some other reference frame, for example a reference frame determined or provided by the type of sensor or sensors used as input to the motion estimator. In addition, each of the motion estimators may use different types of sensor data as input to generate position estimates. For example, one of the motion estimators may use image sensor data and inertial sensors data, while another one of the motion estimators may only use inertial sensors data.

In general, the collection of motion estimators **24-1, 24-2,** and **24-3** are configured to perform motion estimation using various motion estimation techniques such that at least two estimation techniques are used by the collection of motion estimators **24-1, 24-2,** and **24-3.** In certain embodiments, each motion estimator is configured to perform motion estimation using a different motion estimation technique, such that no two motion estimators use the same technique.

Generally speaking, the estimate of position over time that is formed by each of the motion estimators **24-1, 24-2, 24-3** includes one or more estimate components and preferably a plurality of estimate components. The estimate components most typically include an estimate of the location of the mobile device **10** over time, and estimate of the orientation (also referred to as "pose") of the mobile device **10** over time, and an estimate of the velocity of the mobile device **10** over time. The estimate of position over time may include other estimate components, including, for example, an estimate of the acceleration of the mobile device **10** over time, and an estimate of the heading (or bearing) of the mobile device **10** over time. Since each motion estimator forms an estimate of position over time, each estimate component of each estimate of position is a time-series representative of estimates at given time instances.

Parenthetically, within the context of the present disclosure the term "estimate of position" will be used interchangeably with the term "position estimate". Similarly, the term "estimate of location" will be used interchangeably with the term "location estimate", the term "estimate of orientation" will be used interchangeably with the term "orientation estimate", the term "estimate of velocity" will be used interchangeably with the term "velocity estimate".

For an arbitrary motion estimator ***i*** (which can represent any of the motion estimators **24-1, 24-2, 24-3**), the time series of location estimates formed by the motion estimator is represented here as ${l}_{n}^{i}$*,* where *n* represents a time index that can take on integer values in {*0...N*} or {*1...N-1*}, such that ${l}_{n}^{i}$ is a series of locations at *N* time instances. The values of *n* can correspond to time stamps associated with time stamps of the sensor data from which the estimate was formed (i.e., upon which the estimate is based). For a given value of *n,* the location estimate at that *n-*value can be thought of as an estimate of the instantaneous position at that *n*-value. It is convenient to represent ${l}_{n}^{i}$ as a collection of vectors with respect to time *n,* for example using a cartesian coordinate system (x, y, z), a spherical coordinate system (r, θ, φ), or any other system that can represent the location of an object in three-dimensional space. Bear in mind that the coordinate system is in the reference frame of the motion estimator. For convenience, the remaining portions of the present document will rely on representation of the location of the mobile device **10** using the cartesian coordinate system to represent ${l}_{n}^{i}$ as a collection of vectors, however other representations are contemplated. Thus, ${l}_{n}^{i}$ can be conveniently represented as ${l}_{n}^{i} = \left[{x}_{n}^{i} {y}_{n}^{i} {z}_{n}^{i}\right]$*,* where ${x}_{n}^{i}$ are the location estimates of the mobile device **10** estimated by the motion estimator along the x-axis at times indexed by *n,* ${y}_{n}^{i}$ are the location estimates of the mobile device **10** estimated by the motion estimator along the y-axis at times indexed by *n*, and ${z}_{n}^{i}$ are the location estimates of the mobile device **10** estimated by the motion estimator along the z-axis at times indexed by *n.*

Similarly, the time series of the orientation estimates formed by the motion estimator is represented here as ${p}_{n}^{i}$*,* where again *n* represents a time index that can take on integer values in {*0...N*} or {*1...N-1*}. The entries of ${p}_{n}^{i}$ across time can be represented in various ways. One convenient representation is a vector representation, for example using conventional yaw, pitch, roll. Other representations include rotation matrices and quaternions. Certain exemplary cases in subsequent portions of the present document will rely on representation of the orientation of the mobile device **10** using yaw, pitch, roll vector representation. Thus, ${p}_{n}^{i}$ can be presented as ${p}_{n}^{i} = \left[{ϑ}_{n}^{i} {ϕ}_{n}^{i} {ψ}_{n}^{i}\right]$, where ${ϑ}_{n}^{i}$ are the yaw estimates of the mobile device **10** estimated by the motion estimator at times indexed by *n,* ${ϕ}_{n}^{i}$ are the pitch estimates of the mobile device **10** estimated by the motion estimator at times indexed by *n*, and ${ψ}_{n}^{i}$ are the roll estimates of the mobile device **10** estimated by the motion estimator at times indexed by *n*. However, other exemplary cases in subsequent portions of the present document will rely on representation of the orientation of the mobile device **10** using a matrix representation or quaternion representation. Parenthetically, the time series of the orientation estimates can be represented as ${q}_{n}^{i}$ when using quaternions, and as ${Q}_{n}^{i}$ when using rotation matrices.

Similarly, the time series of velocity estimates formed by the motion estimator represented here as ${v}_{n}^{i}$. Since the mobile device **10** may have components of velocity along each of the three major cartesian axes, the velocity is also most conveniently represented as a vector. Thus, ${v}_{n}^{i}$ can be presented as ${v}_{n}^{i} = \left[{Vx}_{n}^{i} {Vy}_{n}^{i} {Vz}_{n}^{i}\right]$*,* where ${Vx}_{n}^{i}$ are the velocity estimates of the mobile device **10** estimated by the motion estimator along the x-axis at times indexed by *n,* ${Vy}_{n}^{i}$ are the velocity estimates of the mobile device **10** estimated by the motion estimator along the y-axis at times indexed by *n,* and ${Vz}_{n}^{i}$ are the velocity estimates of the mobile device **10** estimated by the motion estimator along the z-axis at times indexed by *n.*

Accordingly, each of the estimated locations, orientations, and velocities output by each motion estimator is a vector of vectors or a vector of matrices.

The position estimate that is output by each of the motion estimators **24-1**, **24-2**, **24-3** is a trajectory estimate (also referred to as a path estimate) of the mobile device **10** in the reference frame of the motion estimator. Preferably, the position estimates formed by two different motion estimators have some correspondence in time, preferably corresponding to time instances over a common time interval that have some overlap. In other words, the time stamps associated with the time index value (e.g., n-values) for estimates from two motion estimators are preferably within a common time interval and overlap with each other.

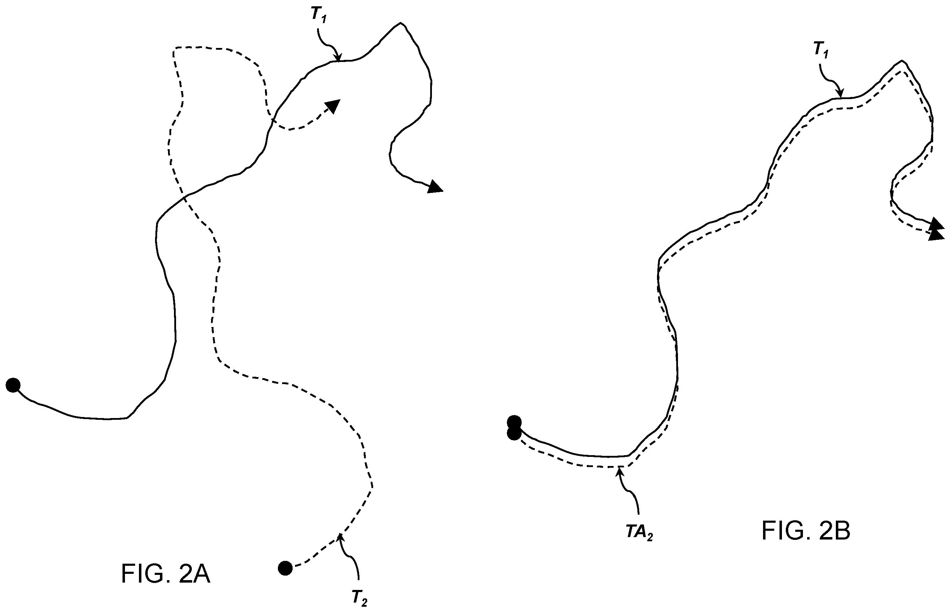

FIG. 2A schematically illustrates a trajectory estimate *T₁* that is the position estimate over time generated by a first one of the motion estimators **24-1, 24-2, 24-3,** and a trajectory estimate ***T₂*** that is the position estimate over time generated by a second one of the motion estimators **24-1, 24-2, 24-3.** Each tic mark of the trajectories ***T₁*** and ***T₂*** represents a time instance having an associated location estimate (and typically also an orientation estimate and a velocity estimate). As can be seen, the trajectories ***T₁*** and ***T₂*** are different. This is due to the reference frames of the two motion estimators being different (which is typically the case when using independent motion estimators).

Thus, in order to switch between motion estimators and/or combine the position estimates formed from different motion estimators **24-1, 24-2, 24-3,** a transformation between the reference frames of the motion estimators is needed. In certain embodiments, the transformation includes one or more transformation operations, including one or more rotation transformation operations, and/or one or more translation transformation operations, and/or one or more scale transformation operations, and/or one or more time shift transformation operations. Application of one or more of the transformation operations enables performance of a spatial alignment, and/or a rotational/orientation alignment, and/or a time alignment (i.e., synchronization) between motion estimators. Spatial alignment is performed in order to provide a consistent, and continuous or near-continuous, trajectory and orientation estimation, and can include rotating and/or translating and/or scaling the trajectory estimated by a first motion estimator to the reference frame of a second motion estimator by applying one or more of the aforementioned transformation operations, including a rotation transformation operation and/or a translation transformation operation and/or a scale transformation operation. Orientation alignment is performed in order to improve the consistency of orientation estimation, and includes rotating the orientation of the mobile device **10** at various points along the estimated trajectory by performing a rotation transformation operation. Synchronization (time alignment) between estimators is typically needed in order to ensure robust trajectory estimation, as well as robust spatial alignment and/or orientation alignment.

FIG. 2B schematically illustrates a spatially aligned trajectory estimate ***TA₂*,** which is the trajectory estimate ***T₂*** generated by the second motion estimator after spatial alignment to the reference frame of the first motion estimator. For reference, the spatially aligned trajectory estimate ***TA*₂** is shown together with the trajectory estimate ***T₁*** that is the position estimate over time generated by the first motion estimator **24-1.**

The transformation between the reference frames of two motion estimators is determined by the transformation module **26,** based at least in part on at least one estimate component (e.g., location estimate, orientation estimate, velocity estimate) of the position estimates formed by the motion estimators.

By way of one non-limiting example, in order to properly switch from a first one of the motion estimators **24-1, 24-2, 24-3** to a second one of the motion estimators **24-1, 24-2, 24-3,** the location estimate formed from the second motion estimator needs to be transformed to the reference frame of the first motion estimator. Similarly, in order to switch from the second motion estimator to another one of the motion estimators, the location estimate formed from the another one of the motion estimators needs to be transformed to the effective reference frame of the second motion estimator (which may now be the reference frame of the first motion estimator). Similarly, when combining the position estimates formed from two motion estimators, transformation from the reference frame of one of the motion estimators to the reference frame other of the motion estimators is needed.

Similar transformation for the orientation estimate ${p}_{n}^{i}$ and the velocity estimate ${v}_{n}^{i}$ may also be needed when performing the aforementioned switching and/or combining.

Furthermore, a time synchronization between the position estimates formed/generated by two motion estimators is typically needed since the processing time needed in order to output the position estimates may differ from motion estimator to motion estimator, and/or the input sensor measurements/sensor data may differ from motion estimator to motion estimator, and/or the processing technique itself may result in a different output time delay. For example, the motion estimator **24-1** may require as input one set of sensor data generated by a first subset of the sensors **12** (e.g., accelerometer and/or gyroscope data), whereas the motion estimator **24-2** may require as input another set of sensor data generated by a second subset of the sensors **12** that is different from the first subset (e.g., camera data). The sensor data generated by different subsets of the sensors may inherently have different time stamps, thus necessitating synchronization in time between the two motion estimators.

In certain embodiments, time synchronization is performed by the transformation module **26** using globally available time stamps associated with the sensor data generated by the various subsets of the sensors **12.** If such global time stamps are available, and the processing time needed in order to output the position estimates is fixed across the motion estimators (i.e., does not vary from motion estimator to motion estimator) and is known, a simple delay line or buffer that compensates for the time difference between sensor measurements can be used.

It is noted however such that such cases of known and fixed processing times are atypical, and therefore it may be preferable to employ other techniques, instead of, or in addition to, the delay/buffer, to compensate for time differences. In one set of particularly preferred but non-limiting embodiments, cross-correlation between an estimate component, e.g., location estimate, orientation estimate, velocity estimate, (or a function thereof) of the position estimate formed by one motion estimator, and a corresponding estimate component (or function thereof) formed by another motion estimator is calculated by the transformation module **26** with respect to time in order to estimate the time offset between two motion estimators. In a particularly preferred but non-limiting implementation, the transformation module **26** calculates the time offset by cross-correlating orientation estimate changes output by the different motion estimators and taking a maximum time shift argument of the correlation in order to identify an optimal or near-optimal time offset. For example, an estimate of the time offset *n*₀ between orientation estimates produced by two motion estimators can be calculated as follows: ${n}_{0} = {argmax}_{n} \left\{{\sum }_{r} {w}_{m - n} ⋅ \partial {p}_{m}^{1} ⋅ \partial {p}_{m - n}^{2}\right\} ,$ where the dot product is the inner product in the field of orientation changes ( $\partial {p}_{m}^{1}$) estimated by one motion estimator (e.g., **24-1**) and the field of time-shifted orientation changes ( $\partial {p}_{m - n}^{2}$) estimated by another motion estimator (e.g., **24-2**), and *w*_{*m*-*n*} is an optional time-shift weight.

It is noted that throughout a majority of the remaining portions of the present description, variables and expressions having an index of *1* in a subscript or superscript indicate association with a first motion estimator, and variables and expressions having an index of 2 in a subscript or superscript indicate association with a second motion estimator. This is in no way intended to be limiting, and is merely intended to more clearly illustrate the embodiments of the disclosed subject matter.

The transformation module **26** performs spatial alignment between two motion estimators and their associated reference frames by taking the location estimates (over time) of the trajectory (position estimate) output by each of the two motion estimators, and estimating the difference in rotation, and/or translation, and/or scale between the two motion estimators. Mathematically, this estimation problem is a minimization problem that is generally similar to Wahba's problem, which finds a rotation matrix between two coordinate systems (i.e., reference frames) from a set of weighted vector observations, but with the addition of translation (and possibly scale). Note that translation as used herein generally refers to translation in the context of the geometric transformation, i.e., the movement of every point of a figure or a space by the same distance in a given direction.

In one exemplary case, the spatial alignment produces a rotation transformation operation ${R}_{2}^{1}$ and a translation transformation operation ${t}_{2}^{1}$, where the subscript indicates the motion estimator that the reference frame is being transformed from, and the superscript indicates the motion estimator that the reference frame is being transformed to. In this case, the minimization problem takes the form of: $\left({R}_{2}^{1}, {t}_{2}^{1}\right) = {argmin}_{R , t} \left\{{\sum }_{n} {\left‖R⋅{l}_{n - {n}_{0}}^{2}+t-{l}_{n}^{1}\right‖}^{2}\right\} ,$ where *R* is a 3-by-3 matrix that is descriptive of a rotation estimation, and *t* is a vector that is descriptive of a translation estimation.

In cases where orientation estimation is provided by fusion of inertial sensor data (e.g., data from the accelerometer **13**a-1 or gyroscope **13**a-2) so that gravity is maintained in a constant direction across the reference frames of both motion estimators, the rotation estimation can be reduced in degrees of freedom such that only horizontal rotation between the two reference frames need be estimated, thus reducing the matrix *R* to a 2-by-2 matrix. In cases where the both motion estimators use the same sensors to form orientation estimation, rotation estimation/transformation is not needed. In cases where the motion estimators output different orientation estimations, the rotation transformation operation can be derived from the orientation estimation time- series ${p}_{n}^{1}$ and ${p}_{n}^{2}$*,* for example using the following expression: ${R}_{2}^{1} = {p}_{n}^{1} ⋅ {\left({p}_{n - {n}_{0}}^{2}\right)}^{T} ,$ or some other time-averaging of the terms of ${p}_{n}^{1}$ and ${p}_{n}^{2}$*.*

It is noted that in cases where the motion estimators do not output orientation estimates, i.e., when the position estimates do not include orientation estimates as components, the time offset *n*₀ cannot be determined using the cross-correlation described above. In such cases, the previously discussed minimization problem can be expanded to also determine the time offset *n*₀. Furthermore, the minimization problem can also be expanded to determine a scale ratio estimate between the two motion estimators. Thus, the minimization problem can generally be expressed as: $\left({R}_{2}^{1}, {t}_{2}^{1}, {n}_{0}, {s}_{2}^{1}\right) = {argmin}_{R , t , {n}_{0} , s} \left\{{\sum }_{n} {\left‖s⋅R⋅{l}_{n - {n}_{0}}^{2}+t-{l}_{n}^{1}\right‖}^{2}\right\} ,$ where ${s}_{2}^{1}$ is a scale transformation operation that accounts for difference in magnitude between the two motion estimators, and where the minimization can be modified depending on the estimate components are included in the position estimates that are output by the motion estimators.

Ultimately, one or more of the transformation operations ${R}_{2}^{1} , {t}_{2}^{1} , {s}_{2}^{1}$ can be used to transform certain estimate components, that are output by a second motion estimator, from the reference frame of the second motion estimator to the reference frame of a first motion estimator. In certain cases, the transformation operations ${R}_{2}^{1} , {t}_{2}^{1} , {s}_{2}^{1}$ can be used in combination to transform location estimates formed by the second motion estimator from the reference frame of the second motion estimator to the reference frame of a first motion estimator. The following formulation is representative of a such a case: ${l}_{n}^{2 \to 1} = {s}_{2}^{1} ⋅ {R}_{2}^{1} ⋅ {l}_{n - {n}_{0}}^{2} + {t}_{2}^{1} ,$ where ${l}_{n}^{2 \to 1}$ represents the time series of locations estimated by the second motion estimator in the reference frame of the first motion estimator.

As can be understood from the above formulation, to generate ${l}_{n}^{2 \to 1}$ from the time series of location estimates formed from the second motion estimator, the time series of location estimates formed from the second motion estimator are: 1) shifted by the estimated time offset *n*₀ (thus performing a time shift/synchronization operation between the two estimators), 2) rotated by the estimated rotation matrix ${R}_{2}^{1}$ (thus performing a rotation transformation operation), 3) scaled by the estimated scale function ${s}_{2}^{1}$ (thus performing a scale transformation operation), and 4) translated by the estimated translation ${t}_{2}^{1}$ (thus performing a translation transformation operation). The time shift operation performed at 1) effectively shifts the time instances associated with the location estimates formed from the second motion estimator relative to time instances associated with the location estimates formed by the first motion estimator by the estimated time offset amount *n*₀.

In certain embodiments, the velocity estimates ${v}_{n}^{2}$ formed by the second motion estimator can be transformed from the reference frame of the second motion estimator to the reference frame of a first motion estimator by differentiating ${l}_{n}^{2 \to 1}$ (since velocity is the first derivative of location with respect to time). Thus, ${v}_{n}^{2 \to 1} = \partial {l}_{n}^{2 \to 1}$*.* Similarly, in cases where the motion estimators form acceleration estimates ${α}_{n}^{i}$, the acceleration estimates ${α}_{n}^{2}$ formed by the second motion estimator can be transformed from the reference frame of the second motion estimator to the reference frame of a first motion estimator by differentiating ${v}_{n}^{2 \to 1}$ or twice differentiating ${l}_{n}^{2 \to 1}$ (since acceleration is the first derivative of velocity with respect to time, i.e., the second derivative of location with respect to time). Thus, ${α}_{n}^{2 \to 1} = \partial {v}_{n}^{2 \to 1}$*.*

As previously mentioned, the transformation from the reference frame of one motion estimator to the reference frame of another motion estimator is needed in order to switch between motion estimators and/or combine the position estimates formed from different motion estimators. In certain embodiments, the transformation module **26** additionally performs switching between motion estimators, for example from a first motion estimator to a second motion estimator, in response to one or more switching conditions (i.e., one or more switching criteria).

Parenthetically, it is first noted that each motion estimator may provide an indication of its availability to provide output for each component of the position estimate, and/or a quality and/or uncertainty associated with the components of the position estimates (which can be part of the position estimates themselves). It is also noted that typically quality and uncertainty have an inverse relationship, whereby for a given component of a position estimate, an estimate that has low quality has a high degree of uncertainty, and an estimate that has high quality has a low degree of uncertainty.

The conditions for switching between motion estimators may be based on various factors, including, for example, the availability indicator provided by motion estimators, and/or the quality and/or uncertainty associated with the position estimates formed by the motion estimators, and/or power consumption associated with the motion estimators (since the motion estimation technique performed by one of the motion estimators may be more computationally complex than the motion estimation technique performed by another one of the motion estimators), and/or side information indicative of the usage of the mobile device **10** provided by one or more of the sensors **12.** For example, the proximity sensor **13**f may provide an indication that the mobile device **10** is in the pocket of a user (e.g., when the mobile device **10** is not actively being used by the user) or near the ear of a user (e.g., when the mobile device **10** is actively being used as a telephone by the user) which can indicate that it may be appropriate to switch from one motion estimator to another motion estimator.

In certain non-limiting implementations, the transformation module **26** may analyze sensor data received from the sensors **12** and/or data or information associated with the motion estimators (and/or the estimates that are output by the motion estimators) and/or the mobile device **10** in order to evaluate switching conditions. Such analysis can include, for example, analyzing the availability indicator provided by motion estimators, and/or the quality and/or uncertainty associated with the estimates provided by motion estimators, and/or power consumption data, and/or proximity sensor data, and/or any other metrics that may provide an indication of whether to trigger switching from one motion estimator to another motion estimator. In certain non-limiting implementations, the analysis is performed per component of a position estimate and the analysis results of the components are aggregated. In other non-limiting implementations, the analysis is performed globally for a position estimate.

In certain embodiments, the transformation module **26** may be programmed with a prioritized weighting of motion estimators such that the transformation module **26** may prefer to use position estimates of one or some motion estimator(s) over position estimates of another or other motion estimator(s) provided that the preferred motion estimator(s) are available and/or has/have higher quality and/or lower degree(s) of uncertainty compared with less preferred motion estimator(s).

Based on the analysis performed by the transformation module **26,** the transformation module **26** can switch from one motion estimator to another motion estimator at a switch point, which is a time instance at which the switching takes place. The switching can include applying one or more of the transform operations discussed herein so as to perform spatial alignment and/or orientation alignment and/or time alignment.

For example, the transformation module **26** may analyze the availability indicator provided by a first (current) motion estimator and the availability indicator provided by a second motion estimator, and switch from the current motion estimator to the second motion estimator when the current motion estimator becomes unavailable to provide estimation output. As another example, the transformation module **26** may analyze uncertainty measurements associated with position estimates provided by a first (current) motion estimator, and switch from the current motion estimator to the second motion estimator when the uncertainty measurements are above an uncertainty threshold value. It is noted that in such uncertainty-based switching situations, the transformation module **26** preferably also analyzes the uncertainty measurements associated with position estimates provided by the second (switched to) motion estimator to ensure that the uncertainty measurements associated with the position estimates provided by the second motion estimator are below the uncertainty threshold. Switching can similarly be performed based on analyzing quality measurements associated with position estimates provided by the motion estimators.

In certain embodiments, the transformation module **26** provides an estimation output that includes estimates formed from one motion estimator at time instances prior to the switch point, and estimates formed from another motion estimator at time instances from the switch point onward. For instance, continuing with the above example in which the estimates formed by a second motion estimator are transformed from the reference frame of the second motion estimator to the reference frame of a first motion estimator, the location estimate time series that is output by the transformation module **26** can be as follows: ${l}_{n} = \left\{\begin{matrix}{l}_{n}^{1} , & n < {n}_{s} \\ {l}_{n}^{2 \to 1} , & n \geq {n}_{s}\end{matrix}\right. ,$ where *nₛ* represents the switch point (i.e., the time instance at which the transformation module **26** switches from the first motion estimator to the second motion estimator.

As should be apparent, the above-described switching can be extended to switching between motion estimators at more than one switch point and/or switching between more than two motion estimators at various switch points. For example, the transformation module **26** may switch from a first motion estimator to a second motion estimator at a first switch point, switch back to the first motion estimator from the second motion estimator at a second switch point, and so on and so forth. As another example, the transformation module **26** may switch from a first motion estimator to a second motion estimator at a first switch point, switch from the second motion estimator to a third estimator at a second switch point, switch from the third motion estimator to a fourth motion estimator at a third switch point, and so on and so forth. Furthermore, at any one of the switch points, the transformation module **26** may switch back to one of the previously used motion estimators.

As should be further apparent, in order to perform such extended switching, additional transformation from one reference frame to another reference frame is vital in order to ensure consistent trajectory estimates. For example, consider the case in which the transformation module **26** performs switching from a first motion estimator to a second motion estimator at a first switch point, and then performs switching from the second motion estimator to a third motion estimator at a second switch point. As discussed above, for the first switch point the transformation module **26** determines a transformation to transform the position estimates formed by the second motion estimator from the reference frame of the second motion estimator to the reference frame of the first motion estimator. Thus, at the first switch point, the position estimates that are output by the second motion estimator are transformed to the reference frame of the first motion estimator. Then, when switching from the second motion estimator to the third motion estimator (at the second switch point), the transformation module **26** determines a transformation to transform the position estimates formed by the third motion estimator from the reference frame of the third motion estimator to the effective reference frame of the second motion estimator - which in the present example is the reference frame of the first motion estimator. Thus, at the second switch point, the position estimates that are output by the third motion estimator are transformed to the reference frame of the first motion estimator.

In certain embodiments, the transformation module **26** employs an estimate combining scheme instead of a switching scheme to combine like components of position estimates from two (or more) motions estimators to provide a single estimation output for each component. In such embodiments, the transformation module **26** performs ratio combining of like components from two different estimators using sets of weights assigned to the motion estimators. Prior to combining the estimates, the transformation module **26** transforms the estimate formed by one of the motion estimators from the reference frame of that motion estimator to the reference frame of the other motion estimator. Thus, the transformation module **26** performs the combining based on the assigned weights and the transformation.

In certain preferred but non-limiting implementations, the weights are assigned per estimate component, and can be assigned by the transformation module **26.**

Continuing with the above example in which the estimates formed by a second motion estimator are transformed from the reference frame of the second motion estimator to the reference frame of a first motion estimator, the location estimate time series that is output by the transformation module **26** can be as follows: ${l}_{n} = {w}_{n}^{1} ⋅ {l}_{n}^{1} + {w}_{n}^{2} ⋅ {l}_{n}^{2 \to 1} ,$ where ${w}_{n}^{1}$ and ${w}_{n}^{2}$ represent the weights (in this case time-series of weights) assigned to the first motion estimator and the second motion estimator, respectively. The weights satisfy the constraint equation ${\sum }_{i} {w}_{n}^{i} = 1$.

The weights can be assigned in various ways. In one non-limiting example, a fixed ratio is employed by the transformation module **26,** such that for each time instance of the weight time-series, the ratio between the weight of one set and the weight of another set does not change with respect to time. In another sometimes more preferable non-limiting implementation, the weights of each set of weights are functions of one or more statistical properties or characteristics of the estimates. For example, for a given motion estimator the weights associated with an estimate component of the position estimate formed by that motion estimator can be assigned as a function of the uncertainty and/or quality of the estimate. In another example, for a given motion estimator the weights associated with an estimate component of the position estimate formed by that motion estimator can be assigned as a function of the covariance, variance or standard deviation of the estimates (e.g., ${w}_{n} ∼ \frac{1}{{σ}_{n}}$, where *σₙ* represents the standard deviation over time).

Parenthetically, for a location estimate, weights can be assigned for each component of the location estimate vector (e.g., weight per each of x, y, and z component, or per each of r, θ, and φ components, etc.).

In certain instances, after performing an initial spatial alignment on the trajectories generated by two motion estimators (to transform the reference frame of one of the motion estimators to the reference frame of the other motion estimator), the estimates output by the two motion estimators may continue to diverge. Therefore, the transformation module **26** may intermittently (i.e., from time to time) perform spatial re-alignment to ensure that the position estimates formed from two motion estimators do not excessively diverge. In certain non-limiting implementations, the spatial re-alignment is not performed intermittently, but rather is performed only when specific estimate divergence conditions are met (e.g., if the divergence between two estimates is above a threshold value). In yet other non-limiting implementations, the transformation module **26** can employ an ongoing alignment scheme where, after each instance in which the position estimates from different motion estimators are combined (as described above), the different motion estimators are aligned to the combined output.

As with switching between motion estimators at more than one switch point and/or switching between more than two motion estimators at various switch points, the above-described combining can be extended to combining between more than two motion estimators.

Thus far, the switching and combining schemes employed by the transformation module **26** have been described by way of example within the context of transformations corresponding to spatial alignment for location estimate time series (e.g., ${l}_{n}^{2 \to 1}$). However, as previously mentioned, transformations for orientation alignment may also be needed for orientation estimation, in particular in situations in which the motion estimators output orientation estimates (i.e., when the position estimate formed by a motion estimator includes an orientation estimate as a component). In certain non-limiting implementations, a transformation operation based on orientation estimates at a switch point (*nₛ*) from first and second motion estimators is used to transform orientation estimates formed by the second motion estimator from the reference frame of the second motion estimator to the reference frame of the first motion estimator. This transformation operation is a rotation-type of transformation operation, and in a representative example can be formulated as follows: ${q}_{n}^{2 \to 1} = {q}_{{n}_{s}}^{1} ⋅ {q}_{n}^{1} ⋅ {{q}_{{n}_{s}}^{2}}^{T} ,$ where ${q}_{n}^{2 \to 1}$ represents the time series of orientations estimated by the second motion estimator in the reference frame of the first motion estimator.

Similar to as described above with reference to switching between motion estimators to output location estimates, the transformation module **26** can switch between orientation estimates from different motion estimators to provide an orientation estimate time series as follows: ${q}_{n} = \left\{\begin{matrix}{q}_{n}^{1} , & n < {n}_{s} \\ {q}_{n}^{2 \to 1} , & n \geq {n}_{s}\end{matrix}\right. ,$

When the transformation module **26** employs an estimate combining scheme instead of a switching scheme, the orientation estimates from the different motion estimators can be combined using the same or similar rationale as discussed above for location estimate combining (e.g., using fixed ratio weights, weights that are functions of covariance, variance or standard deviation, etc.). It is noted, however, that the precise method of combining orientation estimates may depend on the representation of the orientation (e.g., yaw/pitch/roll vector representation, quaternion representation, rotation matrix representation, etc.). By way of one non-limiting example, if the orientation estimates formed by the two motion estimators are represented as rotation matrices ${Q}_{n}^{1}$ and ${Q}_{n}^{2}$ (instead of the ${p}_{n}^{1}$ and ${p}_{n}^{2}$ yaw, pitch, roll vector representation of orientation), such that the orientation estimate transformation from the reference frame of the second motion estimator to the reference frame of the first motion estimator is also represented as a matrix ${Q}_{n}^{2 \to 1}$, a simple weighted geometric mean be used by the transformation module **26** to perform the combining to generate the matrix time series *Qₙ*, for example as follows: ${Q}_{n} = {Q}_{n}^{{1}^{{r}_{n}^{1}}} ⋅ {Q}_{n}^{2 \to {1}^{{r}_{n}^{2}}} ,$ where ${r}_{n}^{1}$ and ${r}_{n}^{2}$ represent the weights (in this case time-series of weights) assigned to the first motion estimator and the second motion estimator, respectively. The weights satisfy the constraint equation ${\sum }_{i} {r}_{n}^{i} = 1$.

As should be apparent, the switching and combining schemes for orientation estimates can easily be extended to cases involving more than two motion estimators, similar to as described above with respect to location estimates.

It is noted that the various transformation operations discussed herein for performing spatial and orientation alignment are estimations. For example, the transformation operation ${R}_{2}^{1}$ is an estimation of a rotation matrix that can be applied to a location estimation. Similarly, for example the transformation operations ${p}_{{n}_{s}}^{1} ⋅ {p}_{n}^{1} ⋅ {{p}_{{n}_{s}}^{2}}^{T}$ that are used for generating ${p}_{n}^{2 \to 1}$ are orientation or rotation estimations.

It is noted that the transformation and switching examples above have been provided within the context of switching from a first motion estimator to a second motion estimator (via transforming the reference frame of the second motion estimator to the reference frame of the first motion estimator). However, switching from the second motion estimator to the first motion estimator via a transformation that transforms the reference frame of the first motion estimator to the reference frame of the second motion estimator should be apparent to those of skill in the art. Moreover, the use of "first", "second", "third", etc. to designate motion estimators and their reference frames, as used throughout the present disclosure, is merely for the purposes of distinguishing among the motion estimators (and reference frames).

In certain embodiments, the position estimates (either combined or switched) output by the transformation module **26** can be used by an IPS, exemplarily represented by the IPS module **28,** to augment the performance of the IPS, preferably by modifying map data that is descriptive of an indoor environment (and that may be received from the map server **32**) based on the position estimates. The position estimates can be utilized by the IPS module **28** together with the map data in various ways, including, for example, advancing a previously known location characterized by the map data, classifying floor transitions or specific motions performed by the mobile device **10** in association with the map data, updating a fingerprint map that is characterized by the map data, and more. In certain embodiments, when the transformation module **26** outputs the position estimates in the reference frame of the mobile device **10,** the IPS module **28** can process the position estimates to transform the position estimates to a global indoor map reference frame. In such embodiments, the IPS module **28** may process position estimates received from the transformation module **26** together with the map data as well as sensor data received from one or more of the sensors **12.**

Attention is now directed to FIG. 3, which shows a flow diagram detailing a process **300** in accordance with embodiments of the disclosed subject matter. The process includes an algorithm for calculating a transformation from the reference frame of one of the motion estimators **24-1, 24-2, 24-3** to another one of the motion estimators **24-1, 24-2, 24-3.** Reference is also made to the elements of FIG. 1. The process and sub-processes of FIG. 3 include computerized (i.e., computer-implemented) processes performed by the system, including, for example, the CPU **16** (or the server processing system **34**) and associated components, including the estimator module **22,** the transformation module **26,** and the IPS module **28.** The aforementioned process and sub-processes are for example, performed automatically, but can be, for example performed manually, and are performed, for example, in real time.

The process **300** begins at step **302,** where one or more of the sensors **12** collect sensor measurements and generate sensor data (responsive to the sensor measurements) at the mobile device **10.** At step **304,** the sensor data is provided to the estimator module **22,** which employs at least two motion estimators each having an associated reference frame. For example, a first set of the sensor data (for example generated by one set of the sensors **12**) is provided as input to a first of the motion estimators (e.g., **24-1**) having an associated reference frame, and a second set of the sensor data (for example generated by another set of the sensors **12**) is provided as input to a second of the motion estimators (e.g., **24-2**) having an associated reference frame. For clarity of illustration, the remaining steps of the process **300** will be described within the context of using two motion estimators, but as should be apparent to those skilled in the art the process **300** can easily be extended to motion estimation using more than two motion estimators.

At step **306,** the first motion estimator estimates position of the mobile device **10** over time based on the first set of sensor data. At step **308,** the second motion estimator estimates position of the mobile device **10** over time based on the second set of sensor data. The first and second motion estimators form the respective estimates of position (i.e., position estimates) by employing respective motion estimation techniques. As discussed above, the position estimate over time formed by each motion estimator can include one or more estimate components, and typically but not necessarily include a plurality of estimate components in the form of location estimates, orientation/pose estimates, and velocity estimates, which forms a trajectory/path estimate in the reference frame of the motion estimator.

As discussed, in order to switch from one of the motion estimators to another one of the motion estimators, or to combine position estimate outputs from two (or more) of the motion estimators, a transformation is needed. In order to determine/calculate the transformation, the transformation module **26** may first receive (from the estimator module **22**) the position estimates formed by the motion estimators (at step **310**).

At step **312,** the transformation module **26** processes the received position estimates to determine the transformation from the reference frame of one of the motion estimators (e.g., motion estimator **24-1** or motion estimator **24-2**) to the reference frame of another one of the motion estimators (e.g., motion estimator **24-2** or motion estimator **24-1**). For convenience of representation, the transformation determined at step **312** is a transformation from the reference frame of a second one of the motion estimators (e.g., **24-2**) to the reference frame of a first one of the motion estimators (e.g., **24-1**), but as mentioned above the reverse is also possible. The transformation is determined based at least in part on the estimate component or components of the position estimates formed by the motion estimators (at steps **306** and **308**). As discussed above, the transformation includes one or more transformation operations, including one or more rotation transformation operations, and/or one or more translation transformation operations, and/or one or more scale transformation operations, and/or one or more time shift transformation operations. The application of the aforementioned transformation operations enables the transformation module **26** to perform a spatial alignment, and/or a rotational/orientation alignment, and/or a time alignment (i.e., synchronization) between the motion estimators.

In certain embodiments, the process **300** moves from step **312** to step **314**a, where the transformation module **26** switches from the first motion estimator (e.g., **24-1**) to the second motion estimator (e.g., **24-2**) in response to satisfying one or more switching conditions so as to form a single position estimate. The switching includes applying, by the transformation module **26,** the transformation determined at step **312** to transform the estimate components of the position estimate formed by the motion estimator **24-2** from the reference frame of the motion estimator **24-2** to the reference frame of the motion estimator **24-1.** Note that if switching from the second motion estimator to the first estimator is desired, the transformation determined at step **312** should be a transformation that transforms the reference frame of the first motion estimator (e.g., **24-1**) to the reference frame of the second motion estimator (e.g., **24-2**).

In other embodiments, the process **300** moves from step **312** to step **314**b, where the transformation module **26** combines the corresponding estimate components of position estimates from two or more motion estimators to form a single position estimate. In order to combine corresponding components of position estimates, the transformation module **26** first aligns the estimate components to be in a common reference frame, which can be the reference frame of any of the motion estimators, for example, the reference frame of the motion estimator **24-1,** by applying the transformation determined at step **312.** For example, assuming that the common reference frame is the reference frame of the motion estimator **24-1,** the transformation module **26** applies the transformation determined at step **312** to transform estimate components of the position estimate formed by the motion estimator **24-2** from the reference frame of the motion estimator **24-2** to the reference frame of the motion estimator **24-1.** The corresponding estimate components are combined, using a weighted combination, as discussed above.

At step **316,** the IPS module **28** receives the position estimate from the transformation module **26,** which is either a combined position estimate (as in step **314**b) or a position estimate that is switched between two or more motion estimators (as in step **314**a). At step **318,** the IPS module **28** processes the position estimate received at step **316,** preferably together with map data associated with the indoor environment in which the mobile device **10** is deployed/located, to modify the map data, for example to update a fingerprint map or a feature map. As discussed, the map data can be received, for example, from the map server **32** over the network **30,** and is modified based at least in part on the received position estimate. The processing at step **318** may further include processing the map data and the position estimate together with sensor data received from one or more of the sensors **12** to update a fingerprint map or a feature map.

In certain preferred embodiments, steps **306** and **308** are performed concurrently or simultaneously, such that the estimator module **22** employs two or more motion estimators to form position estimates over a common time interval (period of time). In embodiments in which the transformation module **26** is further configured to employ a switching scheme, it may be preferable to terminate estimation by the motion estimator that was switched from simultaneously with, or immediately after, the switching is performed. In one non-limiting implementation, the estimator module **22** receives a termination command (for example provided by the transformation module **26**) to terminate estimation by the motion estimator that was switched from. The termination command can be provided simultaneously or concurrently at the time of the switching action (i.e., simultaneously or concurrently at switch point (*nₛ*)), or immediately after the switching action is performed. For example, if at step **314**a the transformation module **26** switches from the first motion estimator (e.g., **24-1**) to the second motion estimator (e.g., **24-2**) at time *nₛ*, the estimator module **22** preferably receives the termination command at *nₛ* (or immediately after *nₛ*, for example a few clock cycles after nₛ) and terminates position estimation by the first motion estimator. Employing motion estimator termination can provide certain advantages, for example reducing the number of computations performed by the CPU **16** (or server processing system **34**), thereby reducing power consumption.

Motion estimator termination can be extended to include termination of position estimation by any motion estimator that is not the motion estimator that was switched to at the switch point.

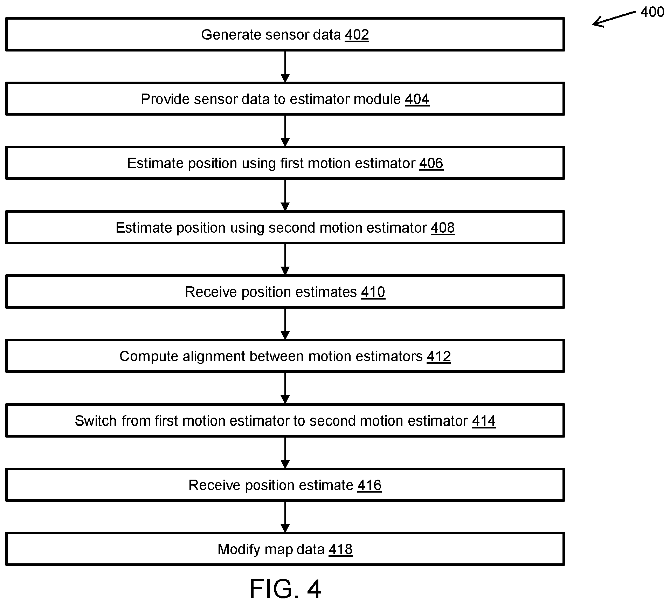

FIG. 4 shows a flow diagram detailing a process **400** in accordance with embodiments of the disclosed subject matter that is generally similar to the process of FIG. 3, but includes an algorithm for calculating an alignment between one of the motion estimators **24-1, 24-2, 24-3** and another one of the motion estimators **24-1, 24-2, 24-3,** and then switching between the motion estimators in accordance with one or more switching conditions. Similar to the process of FIG. 3, the process of FIG. 4 will be described within the context of using two motion estimators for clarity of illustration, but can easily be extended to situations in which more than two motion estimators are employed. The process and sub-processes of FIG. 4 include computerized (i.e., computer-implemented) processes performed by the system, including, for example, the CPU **16** (or the server processing system **34**) and associated components, including the estimator module **22,** the transformation module **26,** and the IPS module **28.** The aforementioned process and sub-processes are for example, performed automatically, but can be, for example performed manually, and are performed, for example, in real time.

Steps **402** - **410** are identical to steps **302 - 310,** and so the details of steps **402 - 410** will not be repeated here. At step **412,** the transformation module **26** computes an alignment between a first motion estimator (e.g., **24-1**) and a second motion estimator (e.g., **24-2**). The alignment is computed by determining a transformation (similar to as in step **312** of FIG. 3), including one or more transformation operations, that transforms the reference frame associated with the first motion estimator **24-1** to the reference frame associated with the second motion estimator **24-2,** or vice versa. As discussed, the computed alignment may include a spatial alignment, and/or an orientation alignment, and/or a time alignment (synchronization).

From step **412,** the process **400** moves to step **414,** which is generally similar to step **314**a and should be understood by analogy thereto. From step **414,** the process **400** moves to steps **416** - **418,** which are identical to steps **316 - 318,** and so the details of steps **416 - 418** will not be repeated here.

Similar to as described above with reference to FIG. 3, the process **400** may also employ a motion estimator termination scheme, whereby after step **414** position estimation by the motion estimator that was switched from may be terminated at or immediately after the switch point. When employing more than two motion estimators, the motion estimator termination can include termination of position estimation by any motion estimator that is not the motion estimator that was switched to at the switch point.

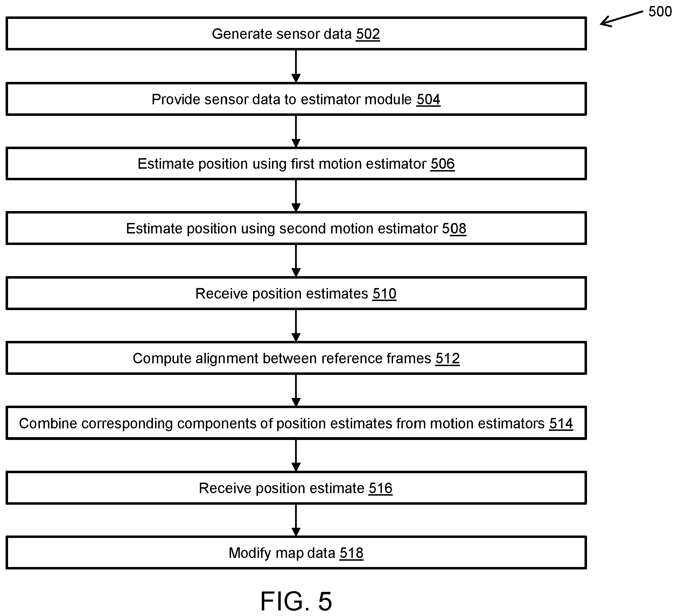

FIG. 5 shows a flow diagram detailing a process **500** in accordance with embodiments of the disclosed subject matter that is generally similar to the processes of FIGS. 3 and 4, and includes an algorithm for calculating an alignment between one of the motion estimators **24-1, 24-2, 24-3** and another one of the motion estimators **24-1, 24-2, 24-3,** and then combining estimates formed from the motion estimators. Similar to the processes of FIGS. 3 and 4, the process of FIG. 5 will be described within the context of using two motion estimators for clarity of illustration, but can easily be extended to situations in which more than two motion estimators are employed. The process and sub-processes of FIG. 5 include computerized (i.e., computer-implemented) processes performed by the system, including, for example, the CPU **16** (or the server processing system **34**) and associated components, including the estimator module **22,** the transformation module **26,** and the IPS module **28.** The aforementioned process and sub-processes are for example, performed automatically, but can be, for example performed manually, and are performed, for example, in real time.

Steps **502 - 510** are identical to steps **302 - 310** and **402 - 410,** and so the details of steps **502 - 510** will not be repeated here. At step **512,** similar to as in step **412,** the transformation module **26** computes an alignment between a first motion estimator (e.g., **24-1**) and a second motion estimator (e.g., **24-2**). The alignment is computed by determining a transformation, including one or more transformation operations, that transforms the reference frame associated with the first motion estimator **24-1** to the reference frame associated with the second motion estimator **24-2,** or vice versa. As discussed, the computed alignment may include a spatial alignment, and/or an orientation alignment, and/or a time alignment (synchronization).

From step **512,** the process **500** moves to step **514,** which is generally similar to step **314b** and should be understood by analogy thereto. From step **514,** the process **500** moves to steps **516 - 518,** which are identical to steps **316 - 318** and **416 - 418,** and so the details of steps **516 - 518** will not be repeated here.

The following paragraphs describe various motion estimation techniques that can be used to form position estimates of the mobile device **10** over time. The motion estimation techniques provided here are by way of example only and should not be considered as exclusive or exhaustive.

One technique of motion estimation is referred to as Pedestrian Dead Reckoning (PDR), which uses knowledge of the human gait cycle and the effect on signals generated by inertial sensors to estimate a trajectory. In a simple implementation, the accelerometer **13**a-1 can be used as a pedometer and the magnetometer **13**b can be used to provide compass heading. Each step taken by the user of the mobile device **10** (measured by the accelerometer **13**a-1) causes position to move forward a fixed distance in the direction measured by the compass (magnetometer **13b**). However, trajectory accuracy of PDR can be limited by precision of the sensors **13**a-1 and **13b**, magnetic disturbances inside structures, and other unknown variables such as the carrying position of the mobile device **10** and the user stride length. Another challenge is differentiating walking from running, and recognizing movements such as climbing stairs or riding an elevator. Therefore, switching from a motion estimator that employs PDR to another motion estimator (that employs a different motion estimation technique), for example when the PDR estimate quality falls below a threshold, can be to advantage.

A relatively newer approach for motion estimation relies on machine learning, in particular deep learning, techniques to train models that output trajectory estimates from available sensor signals carrying sensor data from inertial sensors (e.g., the accelerometer **13**a-1 and/or the gyroscope **13**a-2, and/or orientation estimation).

Another form of motion estimation that can provide accurate trajectory is performed by fusing sensor data from inertial sensors (e.g., the accelerometer **13**a-1 and/or the gyroscope **13**a-2) of the mobile device **10** and a camera of the mobile device **10** (e.g., image sensor **13**e) in a process known as Visual Inertial Odometry (VIO). Images obtained by the camera (i.e., image sensor data) are processed together with inertial measurements (inertial sensor data) to estimate location and orientation. While VIO motion estimation can provide accurate trajectory, the technique can be limited by lighting conditions and the number of visual features in the field of view (FOV) of camera. Thus, VIO motion estimation is not always available (for example in low-light or low-feature conditions), and therefore switching to another motion estimator (that employs a different motion estimation technique) in such conditions is advantageous.

VIO motion estimation is conventionally used as part of a Visual Positioning System (VPS), which as discussed in the background section of the present document, does not use environmental sensing where the mobile device has traversed but rather uses visual features extracted from images captured by the mobile device camera (i.e., image data generated by image sensor or sensors) that are associated with locations that are within the camera FOV. The VPS builds up a feature map from these extracted visual features.

While a first aspect of the present disclosure relates to transformation between motion estimator reference frames (alignment between motion estimators), a second aspect of the present disclosure relates to a system that employs VIO motion estimation together with an IPS that relies on environmental sensing (referred to as environmental IPS), using for example radio sensors **13**d or magnetometers **13**b. It has been found that the combination of VIO motion estimation with environmental IPS can provide several advantages, including robustness to motion of the mobile device **10** and reasonable computation complexity. Within the context of the present disclosure, VIO motion estimation falls within the category of visual odometry motion estimation techniques, which can also include Visual Odometry (VO) in which only image data is used (i.e., inertial sensor data is not fused with image sensor data). Thus, according to aspects of the present disclosure, visual odometry motion estimation techniques are used in combination with (or as part of) an environmental IPS, where in certain embodiments the visual odometry motion estimation technique is implemented as VO, and where in other embodiments the odometry motion estimation technique is implemented as VIO.

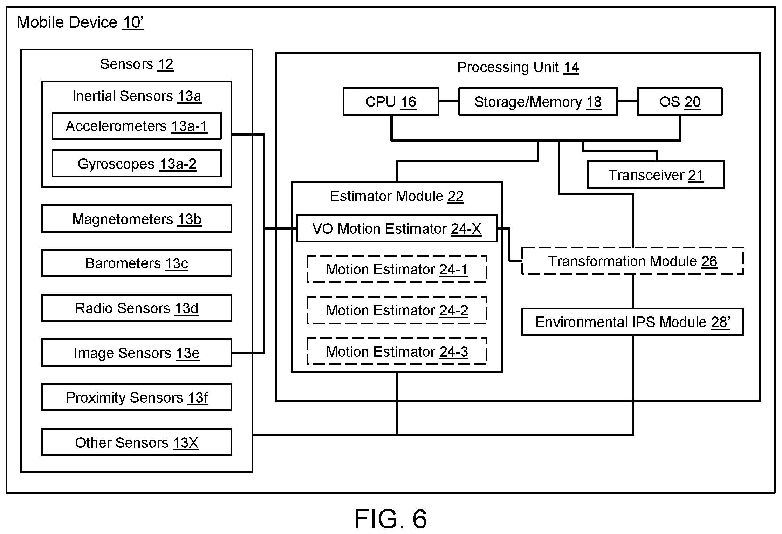

FIG. 6 illustrates the architecture of a mobile device **10'** according to one non-limiting embodiment of this aspect of the present disclosure. The mobile device **10'** is generally similar to the mobile device **10** of FIG. 1, with like components similarly numbered in FIG. 6 as they are numbered in FIG. 1. One feature of the mobile device **10'** that is different from the mobile device **10** is that the estimator module **22** specifically includes a visual odometry motion estimator (designated **24-X**), which employs a visual odometry (VO) motion estimation technique (either conventional VO (i.e., no inertial sensor data) or VIO (i.e., with inertial sensor data)). Also, the IPS module of the mobile device **10'** is designated as environmental IPS module **28',** as the environmental IPS module **28'** employs environmental sensing techniques. It is noted that the two aspects of the disclosure presented herein are of independent utility. However, the second aspect of the disclosed subject matter may be particularly suited to use with additional motions estimators when switching from the visual odometry motion estimator **24-X** (that performs visual odometry motion estimation) to another motion estimator is desired, or when combining the position estimate output by the visual odometry motion estimator **24-X** with outputs from other motion estimators is desired. Therefore, the mobile device **10'** can also optionally include the transformation module **26** and motion estimators **24-1, 24-2, 24-3.**

In certain embodiments, the environmental IPS is magnetic based, and thus relies on sensor data generated by the magnetometers **13**b. In other embodiments, the environmental IPS is radio signal based, and thus relies on sensor data generated by the radio sensors **13**d. In such radio-based embodiments, the radio sensor **13**d can be implemented as a radio frequency (RF) sensor that measures the power that is present in received radio signals, such as ultra-wideband (UWB) signals, cellular signals (e.g., CDMA signals, GSM signals, etc.) Bluetooth signals, wireless local area network (LAN) signals (colloquially referred to as "Wi-Fi signals"). In one non-limiting implementation, the radio sensor **13**d is implemented as a wireless LAN RF sensor configured to perform received signal strength indication (RSSI) measurements based on received wireless LAN signals.

Although not illustrated in FIG. 6, the mobile device **10'** can be communicatively connected or linked to one or more servers through a communication network, such as the network (FIG. 1). Such servers can include, for example, the map server **32** and the server processing system **34** (FIG. 1). Thus, similar to the mobile device of FIG. 1, the mobile device **10'** can exchange data and information (via for example the transceiver **21**) with the map server **32** and/or the server processing system **34** over the network **30.**

In certain embodiments, the position estimates output by the visual odometry motion estimator **24-X** can be used by the environmental IPS, exemplarily represented by the environmental IPS module **28',** to augment the performance of the environmental IPS, preferably by modifying map data that is descriptive of an indoor environment (and that may be received from the map server **32**) based on the position estimates. The position estimates can be utilized by the environmental IPS module **28'** together with the map data in various ways, including, for example, advancing a previously known location characterized by the map data, classifying floor transitions or specific motions performed by the mobile device **10'** in association with the map data, updating a fingerprint map that is characterized by the map data, and more. In certain embodiments, the environmental IPS module **28'** can process the position estimates received from the visual odometry motion estimator **24-X** to transform the position estimates to a global indoor map reference frame. In such embodiments, the environmental IPS module **28'** may process position estimates received from the visual odometry motion estimator **24-X** together with the map data as well as sensor data received from one or more of the sensors **12.**

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, non-transitory storage media such as a magnetic hard-disk and/or removable media, for storing instructions and/or data. Optionally, a network connection is provided as well. A display and/or a user input device such as a keyboard or mouse are optionally provided as well.

For example, any combination of one or more non-transitory computer readable (storage) medium(s) may be utilized in accordance with the above-listed embodiments of the present invention. The non-transitory computer readable (storage) medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD- ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

As will be understood with reference to the paragraphs and the referenced drawings, provided above, various embodiments of computer-implemented methods are provided herein, some of which can be performed by various embodiments of apparatuses and systems described herein and some of which can be performed according to instructions stored in non-transitory computer-readable storage media described herein. Still, some embodiments of computer-implemented methods provided herein can be performed by other apparatuses or systems and can be performed according to instructions stored in computer-readable storage media other than that described herein, as will become apparent to those having skill in the art with reference to the embodiments described herein. Any reference to systems and computer-readable storage media with respect to the following computer-implemented methods is provided for explanatory purposes, and is not intended to limit any of such systems and any of such non-transitory computer-readable storage media with regard to embodiments of computer-implemented methods described above. Likewise, any reference to the following computer-implemented methods with respect to systems and computer-readable storage media is provided for explanatory purposes, and is not intended to limit any of such computer-implemented methods disclosed herein.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein, the singular form "a", "an" and "the" include plural references unless the context clearly dictates otherwise.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

The above-described processes including portions thereof can be performed by software, hardware and combinations thereof. These processes and portions thereof can be performed by computers, computer-type devices, workstations, processors, micro-processors, other electronic searching tools and memory and other non-transitory storage-type devices associated therewith. The processes and portions thereof can also be embodied in programmable non-transitory storage media, for example, compact discs (CDs) or other discs including magnetic, optical, etc., readable by a machine or the like, or other computer usable storage media, including magnetic, optical, or semiconductor storage, or other source of electronic signals.

The processes (methods) and systems, including components thereof, herein have been described with exemplary reference to specific hardware and software. The processes (methods) have been described as exemplary, whereby specific steps and their order can be omitted and/or changed by persons of ordinary skill in the art to reduce these embodiments to practice without undue experimentation. The processes (methods) and systems have been described in a manner sufficient to enable persons of ordinary skill in the art to readily adapt other hardware and software as may be needed to reduce any of the embodiments to practice without undue experimentation and using conventional techniques.

## Claims

1. A method, comprising:
employing a plurality of motion estimators that includes a first motion estimator (24-1) and a second motion estimator (24-2) to form respective first and second estimates of position of a mobile device (10) in an indoor environment over time based on sensor data generated at the mobile device (10), the first and second motion estimators (24-1, 24-2) associated with respective first and second reference frames, and each of the first and second estimates of position including one or more estimate components;
**characterized in that** the method further comprises:
determining a transformation from the second reference frame to the first reference frame based at least in part on at least one estimate component of the one or more estimate components of the first and second estimates of position;
generating new estimates of position by processing the second estimate of position, the processing including applying the transformation to the second estimate of position; and
by an indoor positioning system, processing the new estimates of position together with map data that is descriptive of the indoor environment to augment performance of the indoor positioning system.

2. The method of claim 1, wherein the one or more estimate components include at least one of: a location estimate, an orientation estimate, or a velocity estimate.

3. The method of claim 1, wherein the transformation includes one or more transformation operations that include at least one of: a rotation transformation operation, a translation transformation operation, or a scale transformation operation.

4. The method of claim 1, wherein the transformation includes one or more transformation operations that include a time shift operation that shifts time instances associated with an estimate component of the second estimate of position relative to time instances associated with a corresponding estimate component of the first estimate of position.

5. The method of claim 1, wherein the first motion estimator (24-1) applies a first motion estimation technique, and wherein the second motion estimator (24-2) applies a second motion estimation technique different from the first motion estimation technique.

6. The method of claim 1, wherein the first estimate of position is based on sensor data that is different from sensor data used by the second motion estimator (24-2).

7. The method of claim 1, wherein generating the new estimates of position includes switching from the first motion estimator (24-1) to the second motion estimator (24-2) in response to at least one switching condition.

8. The method of claim 7, wherein the switching includes: applying the transformation to transform at least one estimate component of the one or more estimate components of the second estimate of position from the second reference frame to the first reference frame.

9. The method of claim 1, wherein the plurality of motion estimators includes a third motion estimator (24-3) that forms a third estimate of position of the mobile device (10) in the indoor environment over time based on sensor data generated at the mobile device (10), the third motion estimator (24-3) associated with a third reference frame, the third estimate of position including one or more estimate components, the method further comprising:
determining a second transformation from the third reference frame to the first reference frame based at least in part on at least one estimate component of the one or more estimate components of the first and third estimates of position; and
switching from the second motion estimator to the third motion estimator in response to at least one switching condition by applying the second transformation to transform at least one estimate component of the one or more estimate components of the third estimate of position from the third reference frame to the first reference frame.

10. The method of claim 7, wherein the at least one switching condition is based on at least one of: i) availability of the first motion estimator (24-1), ii) availability of the second motion estimator (24-2), iii) an estimation uncertainty associated with the first motion estimator (24-1), or iv) an estimation uncertainty associated with the second motion estimator (24-2).

11. The method of claim 1, wherein generating the new estimates of position includes combining an estimate component of the one or more estimate components of the first estimate of position with a corresponding estimate component of the one or more estimate components of the second estimate of position, the combining based on: i) the transformation, and ii) a first set of weights associated with the estimate component of the one or more estimate components of the first estimate of position and a second set of weights associated with the corresponding estimate component of the one or more estimate components of the second estimate of position.

12. The method of claim 11, wherein the weights in the first set of weights are a function of an estimation uncertainty associated with the estimate component of the one or more estimate components of the first estimate of position, and wherein the weights in the second set of weights are a function of an estimation uncertainty associated with the corresponding estimate component of the one or more estimate components of the second estimate of position.

13. The method of claim 11, wherein the weights in the first set of weights are inversely proportional to the covariance, the variance, or the standard deviation of the estimate component of the one or more estimate components of the first estimate of position, and wherein the weights in the second set of weights are inversely proportional to the covariance, the variance, or the standard deviation of the corresponding estimate component of the one or more estimate components of the second estimate of position.

14. The method of claim 11, wherein the weights in the first set of weights and the weights in the second set of weights have fixed ratios between each other.

15. A system, comprising:
one or more sensors (12) associated with a mobile device (10) in an indoor environment for generating sensor data from sensor measurements collected at the mobile device (10); and
a processing unit associated (14) with the mobile device (10) including at least one processor (16) in communication with a memory (18), the processing unit (14) configured to:
receive sensor data from the one or more sensors (12),
employ a plurality of motion estimators that includes a first motion estimator (24-1) and a second motion estimator (24-2) to form respective first and second estimates of position of the mobile device (10) in the indoor environment over time based on the sensor data generated at the mobile device (10), the first and second motion estimators (24-1, 24-2) associated with respective first and second reference frames, and each of the first and second estimates of position including one or more estimate components,
**characterized in that** the processing unit (14) is further configured to:
determine a transformation from the second reference frame to the first reference frame based at least in part on at least one estimate component of the one or more estimate components of the first and second estimates of position,
generate new estimates of position by processing the second estimate of position, the processing including applying the transformation to the second estimate of position, and
process the new estimates of position together with map data that is descriptive of the indoor environment to augment performance of an indoor positioning system.

## Patentansprüche

1. Verfahren, umfassend:
Verwenden einer Mehrzahl von Bewegungsschätzern, die einen ersten Bewegungsschätzer (24-1) und einen zweiten Bewegungsschätzer (24-2) einschließen, um eine jeweilige erste und zweite Positionsschätzung einer mobilen Vorrichtung (10) in einer Innenumgebung mit der Zeit auf der Grundlage von an der mobilen Vorrichtung (10) erzeugten Sensordaten zu bilden, wobei der erste und der zweite Bewegungsschätzer (24-1, 24-2) einem jeweiligen ersten und zweiten Referenzrahmen zugeordnet sind und jede der ersten und der zweiten Positionsschätzung eine oder mehrere Schätzkomponenten einschließt;
**dadurch gekennzeichnet, dass** das Verfahren weiter umfasst:
Ermitteln einer Transformation von dem zweiten Referenzrahmen zu dem ersten Referenzrahmen, die zumindest teilweise auf mindestens einer Schätzkomponente der einen oder mehreren Schätzkomponenten der ersten und der zweiten Positionsschätzung basiert;
Erzeugen neuer Positionsschätzungen durch Verarbeiten der zweiten Positionsschätzung, wobei die Verarbeitung ein Anwenden der Transformation auf die zweite Positionsschätzung einschließt; und
durch ein Innenraum-Positionsbestimmungssystem, Verarbeiten der neuen Positionsschätzungen zusammen mit Kartendaten, die die Innenraumumgebung beschreiben, um die Leistung des Innenraum-Positionsbestimmungssystems zu verbessern.

2. Verfahren nach Anspruch 1, wobei die eine oder mehreren Schätzkomponenten mindestens eine einschließen von: einer Positionsschätzung, einer Ausrichtungsschätzung oder einer Geschwindigkeitsschätzung.

3. Verfahren nach Anspruch 1, wobei die Transformation eine oder mehrere Transformationsoperationen einschließt, darunter mindestens eine von: einer Rotationstransformationsoperation, einer Translationstransformationsoperation oder einer Skalierungstransformationsoperation.

4. Verfahren nach Anspruch 1, wobei die Transformation eine oder mehrere Transformationsoperationen einschließt, darunter eine Zeitverschiebungsoperation, welche Zeitinstanzen, die einer Schätzkomponente der zweiten Positionsschätzung zugeordnet sind, relativ zu Zeitinstanzen verschiebt, die einer entsprechenden Schätzkomponente der ersten Positionsschätzung zugeordnet sind.

5. Verfahren nach Anspruch 1, wobei der erste Bewegungsschätzer (24-1) eine erste Bewegungsschätztechnik anwendet, und wobei der zweite Bewegungsschätzer (24-2) eine zweite Bewegungsschätztechnik anwendet, die von der ersten Bewegungsschätztechnik unterschiedlich ist.

6. Verfahren nach Anspruch 1, wobei die erste Positionsschätzung auf Sensordaten basiert, die von den Sensordaten unterschiedlich sind, die von dem zweiten Bewegungsschätzer (24-2) verwendet werden.

7. Verfahren nach Anspruch 1, wobei das Erzeugen der neuen Positionsschätzungen ein Umschalten von dem ersten Bewegungsschätzer (24-1) auf den zweiten Bewegungsschätzer (24-2) als Reaktion auf mindestens eine Umschaltbedingung einschließt.

8. Verfahren nach Anspruch 7, wobei das Umschalten einschließt: Anwenden der Transformation, um mindestens eine Schätzkomponente der einen oder mehreren Schätzkomponenten der zweiten Positionsschätzung von dem zweiten Referenzrahmen zu dem ersten Referenzrahmen zu transformieren.

9. Verfahren nach Anspruch 1, wobei die Mehrzahl von Bewegungsschätzern einen dritten Bewegungsschätzer (24-3) einschließt, der eine dritte Positionsschätzung der mobilen Vorrichtung (10) in der Innenumgebung mit der Zeit auf der Grundlage von an der mobilen Vorrichtung (10) erzeugten Sensordaten bildet, wobei der dritte Bewegungsschätzer (24-3) einem dritten Referenzrahmen zugeordnet ist, wobei die dritte Positionsschätzung eine oder mehrere Schätzkomponenten einschließt, wobei das Verfahren weiter umfasst:
Ermitteln einer zweiten Transformation von dem dritten Referenzrahmen zu dem ersten Referenzrahmen, die zumindest teilweise auf mindestens einer Schätzkomponente der einen oder mehreren Schätzkomponenten der ersten und der dritten Positionsschätzung basiert; und
Umschalten von dem zweiten Bewegungsschätzer auf den dritten Bewegungsschätzer als Reaktion auf mindestens eine Umschaltbedingung, durch Anwenden der zweiten Transformation, um mindestens eine Schätzkomponente der einen oder mehreren Schätzkomponenten der dritten Positionsschätzung von dem dritten Referenzrahmen zu dem ersten Referenzrahmen zu transformieren.

10. Verfahren nach Anspruch 7, wobei die mindestens eine Umschaltbedingung auf mindestens einem basiert von: i) Verfügbarkeit des ersten Bewegungsschätzers (24-1), ii) Verfügbarkeit des zweiten Bewegungsschätzers (24-2), iii) einer dem ersten Bewegungsschätzer (24-1) zugeordneten Schätzunsicherheit, oder iv) einer dem zweiten Bewegungsschätzer (24-2) zugeordneten Schätzunsicherheit.

11. Verfahren nach Anspruch 1, wobei das Erzeugen der neuen Positionsschätzungen ein Kombinieren einer Schätzkomponente der einen oder mehreren Schätzkomponenten der ersten Positionsschätzung mit einer entsprechenden Schätzkomponente der einen oder mehreren Schätzkomponenten der zweiten Positionsschätzung einschließt, wobei das Kombinieren basiert auf: i) der Transformation, und ii) einem ersten Satz von Gewichten, die der Schätzkomponente der einen oder mehreren Schätzkomponenten der ersten Positionsschätzung zugeordnet sind, und einem zweiten Satz von Gewichten, die der entsprechenden Schätzkomponente der einen oder mehreren Schätzkomponenten der zweiten Positionsschätzung zugeordnet sind.

12. Verfahren nach Anspruch 11, wobei die Gewichte in dem ersten Satz von Gewichten eine Funktion einer Schätzunsicherheit sind, die der Schätzkomponente der einen oder mehreren Schätzkomponenten der ersten Positionsschätzung zugeordnet ist, und wobei die Gewichte in dem zweiten Satz von Gewichten eine Funktion einer Schätzunsicherheit sind, die der entsprechenden Schätzkomponente der einen oder mehreren Schätzkomponenten der zweiten Positionsschätzung zugeordnet ist.

13. Verfahren nach Anspruch 11, wobei die Gewichte in dem ersten Satz von Gewichten umgekehrt proportional zur Kovarianz, zur Varianz oder zur Standardabweichung der Schätzkomponente der einen oder mehreren Schätzkomponenten der ersten Positionsschätzung sind, und wobei die Gewichte in dem zweiten Satz von Gewichten umgekehrt proportional zur Kovarianz, zur Varianz oder zur Standardabweichung der entsprechenden Schätzkomponente der einen oder mehreren Schätzkomponenten der zweiten Positionsschätzung sind.

14. Verfahren nach Anspruch 11, wobei die Gewichte in dem ersten Satz von Gewichten und die Gewichte in dem zweiten Satz von Gewichten festgesetzte Verhältnisse zueinander aufweisen.

15. System, umfassend:
einen oder mehrere Sensoren (12), die einer mobilen Vorrichtung (10) in einer Innenraumumgebung zugeordnet sind, um Sensordaten aus an der mobilen Vorrichtung (10) gesammelten Sensormessungen zu erzeugen; und
eine Verarbeitungseinheit (14), die der mobilen Vorrichtung (10) zugeordnet ist und mindestens einen Prozessor (16) in Kommunikation mit einem Speicher (18) einschließt, wobei die Verarbeitungseinheit (14) konfiguriert ist zum:
Empfangen von Sensordaten von dem einen oder den mehreren Sensoren (12),
Verwenden einer Mehrzahl von Bewegungsschätzern, die einen ersten Bewegungsschätzer (24-1) und einen zweiten Bewegungsschätzer (24-2) einschließen, um eine jeweilige erste und zweite Positionsschätzung der mobilen Vorrichtung (10) in der Innenumgebung mit der Zeit auf der Grundlage von den an der mobilen Vorrichtung (10) erzeugten Sensordaten zu bilden, wobei der erste und der zweite Bewegungsschätzer (24-1, 24-2) einem jeweiligen ersten und zweiten Referenzrahmen zugeordnet sind und jede der ersten und der zweiten Positionsschätzung eine oder mehrere Schätzkomponenten einschließt,
**dadurch gekennzeichnet, dass** die Verarbeitungseinheit (14) weiter konfiguriert ist zum: Ermitteln einer Transformation von dem zweiten Referenzrahmen zu dem ersten Referenzrahmen, die zumindest teilweise auf mindestens einer Schätzkomponente der einen oder mehreren Schätzkomponenten der ersten und der zweiten Positionsschätzung basiert,
Erzeugen neuer Positionsschätzungen durch Verarbeiten der zweiten Positionsschätzung, wobei die Verarbeitung ein Anwenden der Transformation auf die zweite Positionsschätzung einschließt, und
Verarbeiten der neuen Positionsschätzungen zusammen mit Kartendaten, die die Innenraumumgebung beschreiben, um die Leistung eines Innenraum-Positionsbestimmungssystems zu verbessern.

## Revendications

1. Procédé, comprenant :
l'utilisation d'une pluralité d'estimateurs de mouvement qui incluent un premier estimateur de mouvement (24-1) et un deuxième estimateur de mouvement (24-2) afin de former respectivement une première et une deuxième estimation de position d'un dispositif mobile (10) dans un environnement intérieur au fil du temps sur la base de données de capteur générées au niveau du dispositif mobile (10), les premier et deuxième estimateurs de mouvement (24-1, 24-2) étant associés respectivement à un premier et à un deuxième cadre de référence, et chacune des première et deuxième estimations de position incluant un ou plusieurs composants d'estimation ;
**caractérisé en ce que** le procédé comprend en outre :
la détermination d'une transformation du deuxième cadre de référence vers le premier cadre de référence sur la base au moins en partie d'au moins un composant d'estimation des un ou plusieurs composants d'estimation des première et deuxième estimations de position ;
la génération de nouvelles estimations de position par traitement de la deuxième estimation de position, le traitement incluant l'application de la transformation à la deuxième estimation de position ; et
par un système de positionnement intérieur, le traitement des nouvelles estimations de position conjointement avec des données cartographiques décrivant l'environnement intérieur afin d'augmenter les performances du système de positionnement intérieur.

2. Procédé selon la revendication 1, dans lequel les un ou plusieurs composants d'estimation incluent au moins l'un parmi : une estimation de localisation, une estimation d'orientation ou une estimation de vitesse.

3. Procédé selon la revendication 1, dans lequel la transformation inclut une ou plusieurs opérations de transformation qui incluent au moins l'une parmi : une opération de transformation par rotation, une opération de transformation par translation ou une opération de transformation d'échelle.

4. Procédé selon la revendication 1, dans lequel la transformation inclut une ou plusieurs opérations de transformation qui incluent une opération de décalage temporel qui décale des instants temporels associés à un composant d'estimation de la deuxième estimation de position par rapport à des instants temporels associés à un composant d'estimation correspondant de la première estimation de position.

5. Procédé selon la revendication 1, dans lequel le premier estimateur de mouvement (24-1) applique une première technique d'estimation de mouvement, et dans lequel le deuxième estimateur de mouvement (24-2) applique une deuxième technique d'estimation de mouvement différente de la première technique d'estimation de mouvement.

6. Procédé selon la revendication 1, dans lequel la première estimation de position est basée sur des données de capteur qui sont différentes de données de capteur utilisées par le deuxième estimateur de mouvement (24-2).

7. Procédé selon la revendication 1, dans lequel la génération des nouvelles estimations de position inclut le basculement du premier estimateur de mouvement (24-1) vers le deuxième estimateur de mouvement (24-2) en réponse à au moins une condition de basculement.

8. Procédé selon la revendication 7, dans lequel le basculement inclut : l'application de la transformation afin de transformer au moins un composant d'estimation des un ou plusieurs composants d'estimation de la deuxième estimation de position du deuxième cadre de référence vers le premier cadre de référence.

9. Procédé selon la revendication 1, dans lequel la pluralité d'estimateurs de mouvement inclut un troisième estimateur de mouvement (24-3) qui forme une troisième estimation de position du dispositif mobile (10) dans l'environnement intérieur au fil du temps sur la base de données de capteur générées au niveau du dispositif mobile (10), le troisième estimateur de mouvement (24-3) étant associé à un troisième cadre de référence, la troisième estimation de position incluant un ou plusieurs composants d'estimation, le procédé comprenant en outre :
la détermination d'une deuxième transformation du troisième cadre de référence vers le premier cadre de référence sur la base au moins en partie d'au moins un composant d'estimation des un ou plusieurs composants d'estimation des première et troisième estimations de position ; et
le basculement du deuxième estimateur de mouvement vers le troisième estimateur de mouvement en réponse à au moins une condition de basculement par application de la deuxième transformation afin de transformer au moins un composant d'estimation des un ou plusieurs composants d'estimation de la troisième estimation de position du troisième cadre de référence vers le premier cadre de référence.

10. Procédé selon la revendication 7, dans lequel l'au moins une condition de basculement est basée sur au moins l'un parmi : i) la disponibilité du premier estimateur de mouvement (24-1), ii) la disponibilité du deuxième estimateur de mouvement (24-2), iii) une incertitude d'estimation associée au premier estimateur de mouvement (24-1) ou iv) une incertitude d'estimation associée au deuxième estimateur de mouvement (24-2).

11. Procédé selon la revendication 1, dans lequel la génération des nouvelles estimations de position inclut la combinaison d'un composant d'estimation des un ou plusieurs composants d'estimation de la première estimation de position avec un composant d'estimation correspondant des un ou plusieurs composants d'estimation de la deuxième estimation de position, la combinaison étant basée sur : i) la transformation, et ii) un premier ensemble de pondérations associé au composant d'estimation des un ou plusieurs composants d'estimation de la première estimation de position et un deuxième ensemble de pondérations associé au composant d'estimation correspondant des un ou plusieurs composants d'estimation de la deuxième estimation de position.

12. Procédé selon la revendication 11, dans lequel les pondérations dans le premier ensemble de pondérations sont une fonction d'une incertitude d'estimation associée au composant d'estimation des un ou plusieurs composants d'estimation de la première estimation de position, et dans lequel les pondérations dans le deuxième ensemble de pondérations sont une fonction d'une incertitude d'estimation associée au composant d'estimation correspondant des un ou plusieurs composants d'estimation de la deuxième estimation de position.

13. Procédé selon la revendication 11, dans lequel les pondérations dans le premier ensemble de pondérations sont inversement proportionnelles à la covariance, à la variance ou à l'écart-type du composant d'estimation des un ou plusieurs composants d'estimation de la première estimation de position, et dans lequel les pondérations dans le deuxième ensemble de pondérations sont inversement proportionnelles à la covariance, à la variance ou à l'écart-type du composant d'estimation correspondant des un ou plusieurs composants d'estimation de la deuxième estimation de position.

14. Procédé selon la revendication 11, dans lequel les pondérations dans le premier ensemble de pondérations et les pondérations dans le deuxième ensemble de pondérations présentent des rapports fixes les unes par rapport aux autres.

15. Système, comprenant :
un ou plusieurs capteurs (12) associés à un dispositif mobile (10) dans un environnement intérieur pour générer des données de capteur à partir de mesures de capteur collectées au niveau du dispositif mobile (10) ; et
une unité de traitement associée (14) au dispositif mobile (10) incluant au moins un processeur (16) en communication avec une mémoire (18), l'unité de traitement (14) étant configurée pour :
recevoir des données de capteur provenant des un ou plusieurs capteurs (12),
utiliser une pluralité d'estimateurs de mouvement qui incluent un premier estimateur de mouvement (24-1) et un deuxième estimateur de mouvement (24-2) afin de former respectivement une première et une deuxième estimation de position du dispositif mobile (10) dans l'environnement intérieur au fil du temps sur la base des données de capteur générées au niveau du dispositif mobile (10), les premier et deuxième estimateurs de mouvement (24-1, 24-2) étant associés respectivement à un premier et à un deuxième cadre de référence, et chacune des première et deuxième estimations de position incluant un ou plusieurs composants d'estimation,
**caractérisé en ce que** l'unité de traitement (14) est en outre configurée pour :
déterminer une transformation du deuxième cadre de référence vers le premier cadre de référence sur la base au moins en partie d'au moins un composant d'estimation des un ou plusieurs composants d'estimation des première et deuxième estimations de position,
générer de nouvelles estimations de position par traitement de la deuxième estimation de position, le traitement incluant l'application de la transformation à la deuxième estimation de position, et
traiter les nouvelles estimations de position conjointement avec des données cartographiques décrivant l'environnement intérieur afin d'augmenter les performances d'un système de positionnement intérieur.
